# EUROPEAN PATENT SPECIFICATION

(11) **EP 4 127 051 B1**
(45) Date of publication and mention of the grant of the patent: **05.03.2025**
(21) Application number: 21714191.0
(22) Date of filing: 26.03.2021
(51) Int. Cl.: C08L 21/00, C08K 3/36, C08K 3/04, C08K 3/34, C08L 9/06, C08L 9/00

(54) **CARBON DIOXIDE ABSORBING TYRE COMPOUND**
KOHLENDIOXIDABSORBIERENDE REIFENZUSAMMENSETZUNG
COMPOSÉ DE PNEU ABSORBANT LE DIOXYDE DE CARBONE

(30) Priority: 30.03.2020 LU 101719
(43) Date of publication of application: 08.02.2023
(73) Proprietor: Apollo Tyres Global R&D B.V., 7521 PT Enschede (NL)
(72) Inventor: VERWEY, Lehani, 7521 PT Enschede (NL); REUVEKAMP, Louis, 7521 PT Enschede (NL); RUDOLF, Manfred Klaus, 7521 PT Enschede (NL)
(74) Representative: Michalski Hüttermann & Partner Patentanwälte mbB
(86) International application number: PCT/EP2021/057971
(87) International publication number: WO 2021/198088

(56) References cited:
- WO-A1-2005/068363
- WO-A1-94/25298
- US-A1- 2010 221 163
- US-A1- 2011 038 774

## Description

The present invention relates to a cross-linkable rubber composition, a cross-linked rubber composition obtained by cross-linking such a rubber composition, a method of preparing a tyre and a tyre.

In the recent times, sustainability has become a key factor in the development of breakthrough solutions for future mobility. Regulatory bodies are continuously implementing stricter standards to comply with the control of greenhouse gas emissions. As a result, the tyre industry has also started focusing more and more on sustainable processes and materials.

In compound development, this process starts right at the beginning with the selection of raw materials to achieve a desired compound mixture and performance. Eco-friendly materials attract significant attention by tyre developers; especially if they can offer the required balance in performance properties, in combination with other beneficial factors such as cost saving, ease of processing etc. Until this date, sustainable materials mostly have fallen short of reaching the ambitious goal of desired material performance and cost.

The environmental impact reduction strategy for any company begins with a continued optimization of raw materials. They are constantly looking for ways to implement sustainable materials and technologies to lower the environmental impact of their business operations. Sustainable materials that can offer the desired effect of combating carbon dioxide (CO₂) emissions and lowering cost of a compound while not influencing the performance in a negative way is always looked for.

CO₂ emissions are known to cause significant environmental problems and continue to remain a massive global issue. Raw materials solutions to combat CO₂ emissions are always looked for.

The mineral olivine is a magnesium iron silicate. Chemically, members of the olivine series are composed of magnesium iron silicate ((Mg,Fe)₂SiO₄). The ratio of magnesium to iron varies between the two endmembers of the series, forsterite (magnesium silicate, Mg₂SiO₄) and fayalite (iron silicate, (Fe₂SiO₄)). Olivine gives its name to the olivine group of minerals with a related structure which further includes tephroite, monticellite, larnite and kirschsteinite. Magnesium rich olivine is known to be a natural CO₂ absorber by converting it into stable carbonate byproducts in the presence of water via the following reactions:

CO₂ + H₂O ↔ HCO3 + H⁺ (1)

Mg₂SiO₄₍ₛ₎ + 2H⁺ + 2HCO₃⁻ ↔ 2MgCO_{3(aq)} + H₄SiO_{4(aq)} (2)

A direct reaction is also a possibility:

Mg₂SiO₄₍ₛ₎ + CO₂ ↔ 2MgCO₃₍ₛ₎ + SiO₂ (3)

NO 177048 A1 describes a wearing surface for tyres, especially for use on icy roads, of the kind where the rubber or rubber mix is supplied with an admixture of friction improving materials. The friction improving materials constitute approximately 20-60 % by weight of the rubber mix, and consist of a mixture of crystalline chrysolite (olivine) powder and a metal powder, being for example a steel powder and/or a powder from an aluminium alloy, and if desired an additional friction supporting material having good binding force to the rubber mixture.

The present invention has the object to at least partially overcome the drawbacks and in particular to provide a rubber composition having CO₂ absorption properties.

This object is achieved by a cross-linkable rubber composition according to claim 1, a cross-linked rubber composition according to claim 8, a method according to claim 12 and a tyre according to claim 13. Advantageous embodiments are the subject of dependent claims. They may be combined freely unless the context clearly indicates otherwise.

Hence, a cross-linkable rubber composition is provided, the cross-linkable rubber composition comprising,
at least one rubber,
at least one filler,
at least one olivine group mineral,
wherein the filler is selected from silica, carbon black or a combination thereof, wherein the olivine group mineral is present in an amount of ≥ 5 phr to ≤ 60 phr, and wherein the ratio in parts by weight per 100 parts by weight of rubber (phr) of the olivine group mineral to the filler is in the range of 1:1 to 1:10.

It has surprisingly been found that the rubber composition provides for a rubber compound that has good carbon dioxide absorption without affecting the mechanical properties and hysteresis properties of the tyre. The addition of olivine group mineral, particularly magnesium rich olivine, to a rubber compound will allow for CO₂ absorption from the atmosphere on the compound surface or after tread wear particulars on the road surface.

In addition to the CO₂ absorbing property, another benefit of using olivine in the tyre composition is the cost. The cost of olivine is a lot cheaper than conventional raw materials used in the rubber compounding. Use of olivine as an additive, even in small amounts, will result in compound savings.

The olivine group mineral may be selected from the group of olivine ((Mg,Fe)₂SiO₄), fosterite (Mg₂SiO₄), fayalite (Fe₂SiO₄), monticellite (CaMgSiO₄), tetphroite (Mn₂SiO₄), lamite (Ca₂SiO₄), kirschsteinite (CaFeSiO₄) or mixtures thereof. In an embodiment of the rubber composition, the olivine group mineral is selected from the group of olivine, fosterite (Mg₂SiO₄), fayalite (Fe₂SiO₄), monticellite (CaMgSiO₄) or mixtures thereof. Preferably, the olivine group mineral is or comprises olivine. In another embodiment of the rubber composition, the olivine group mineral is or comprises fosterite (Mg₂SiO₄).

The filler is selected from silica, carbon black or combination thereof, preferably silica. The filler may be present in an amount of ≥40 phr to ≤ 180 phr. The ratio in parts by weight per 100 parts by weight of rubber (phr) of the olivine group mineral to silica may be in the range of 1:4 to 1:8.

In another embodiment of the composition, the filler is silica and the ratio in parts by weight per 100 parts by weight of rubber (phr) of the olivine group mineral to silica is in the range of 1:1 to 1:3. The silica may be present in an amount of ≥ 40 phr to ≤ 180 phr, preferably in an amount of ≥ 40 phr to ≤ 100 phr. More preferably, the silica may be present in an amount of ≥ 40 phr to ≤ 80 phr.

In another embodiment of the composition, the olivine group mineral is present in an amount of ≥ 5 phr to ≤ 60 phr, preferably in an amount of ≥ 5 phr to ≤ 20 phr or ≥ 10 phr to ≤ 20 phr. The particle size of the olivine group mineral may be in a range of 1 µm to 180 µm.

In another embodiment of the rubber composition, the rubber is selected from natural rubber, isoprene rubber, butyl rubber, halo-butyl rubber, butadiene rubber, styrene butadiene rubber, solution polymerized styrene butadiene rubber or combination thereof.

In another embodiment of the composition, the olivine group mineral has CO₂ absorption of up to 1300 ppm in 200 hrs, measured according to the method given in example 1.

The composition may comprise a coupling agent. The coupling agent may be selected from bis [3-(triethoxysilyl) propyl] disulfide (TESPD), bis-(triethoxysilylpropyl) tetrasulfide (TESPT), mercapto-silane, isophtalic dihydrazide, p-aminobenzenesulfonyl azide or combination thereof.

The composition further may comprise a resin. The resin in the composition may be selected from polyterpene resins, terpene phenolic resins, alpha methyl styrene resins, aliphatic resin, hydrogenated aromatic resin, coumarone indene resin or a combination thereof.

The cross-linkable rubber composition comprises cross-linkable groups, preferably sulphur cross-linkable groups. They may be cross-linked (cured, vulcanised) by methods known to a skilled person in the rubber technology field.

The present invention is further directed towards a cross-linked rubber composition which is obtained by cross-linking a rubber composition according to the invention. The cross-linked rubber composition is a rubber composition having carbon dioxide absorption property.

The cross-linked rubber composition may have an elongation at break ranging from ≥ 253 % to ≤ 442 %. (measured by Tensile test according to ISO 37:2017).

The cross-linked rubber composition may have a rebound value at 70 °C (determined as per ISO 4662:2017) ranging from ≥ 52% to ≤ 67%.

The cross-linked rubber composition may have a tan delta value at 70 °C (determined as per DMA double shear 25°C to 80°C at 6% strain) ranging from ≥ 0.10 to ≤ 0.21.

The present invention also relates to a method of preparing a tyre, comprising the steps of:
- providing a tyre assembly comprising a cross-linkable rubber composition according to the invention;
- cross-linking at least the cross-linkable rubber composition according to the invention in the tyre assembly.

The present invention also relates to a tyre comprising a tread, wherein the tread comprises a cross-linked rubber composition according to the invention.

In the context of this invention the unit "phr" denotes "per hundred parts by weight of rubber", as it is commonly understood in the art. It is further understood that in formulations discussed in connection with the present invention the phr amount of all rubber components adds up to 100.

If not specifically denoted otherwise, given % are weight-%, weight percent, weight-% or wt-%, are synonyms and are calculated on the basis of a total weight of 100 weight% of the respective object, if not otherwise stated. The total amount of all components of the respective object does not exceed 100 wt.-%.

The invention will be further described with reference to the following examples and figures without wishing to be limited by them.
FIG. 1 shows a graph of CO₂ measured versus time for calibration of the desiccator.
FIG. 2 shows a graph of the CO₂ measured versus time when olivine was placed in the desiccator.
FIG. 3 shows a graph of the tan δ as a function of temperature (-80 to 25°C) for reference composition (Ref1) and compositions according to present invention C1, C2, C3 and C4.
FIG. 4 shows a graph of the tan δ as a function of temperature (30 to 80°C) for reference composition (Ref1) and compositions according to present invention C1, C2, C3 and C4.
FIG. 5 shows a graph of the tan δ as a function of temperature (-80 to 25°C) for reference composition (Ref2) and compositions according to present invention C5 and C6
FIG. 6 shows a graph of the tan δ as a function of temperature (30 to 80°C) for reference composition (Ref2) and compositions according to present invention C5 and C6
FIG. 7 shows a graph of the tan δ as a function of temperature (-80 to 25°C) for reference composition (Ref3) and compositions according to present invention C7 and C8
FIG. 8 shows a graph of the tan δ as a function of temperature (30 to 80°C) for reference composition (Ref3) and compositions according to present invention C7 and C8

The cross linked rubber composition of the present invention was analyzed with respect to the reference compound on the below mentioned parameters.

Tensile test: Tensile tests were measured on the Zwick/Roell Robo Test L Z005 tensile tester according to ISO 37:2017. The crosshead speed was 500mm/min. The standardized tensile specimens A1 were cut from the rubber sheet 150x150x2mm cured for 20 mins, at 160°C and 560kN of pressure. Five tensile dumbbells were tested and average results were determined.

Hardness Test: A hardness test was performed on the Bareiss Digitest II Rotation Shore A Hardness Tester according to ISO 7619-1:2010 at 23°C. Samples were prepared for 9min at 170°C. Six measurements were done per test piece and average of the results was taken.

Rebound test: Rebound measurements were done on the Bareiss Digitest II Rückprall Rebound Resilience Tester by the standardized ISO 4662:2017 method at 23°C and 70°C. Cylindrical samples of 28 mm in diameter and 12 mm in thickness were cured at 170°C for 12 minutes.

DMA Analysis: The dynamic measurements of the cured compounds were performed using a Metravib DMA +450 dynamic spectrometer in double shear mode. Samples were prepared as cylinders of 8 mm diameter and thickness of 2 mm cured at 170°C for 10 minutes. Samples were conditioned after vulcanization for 24 hours at room temperature. The dynamic measurements were conducted by a temperature sweep at constant frequency 10 Hz. A dynamic strain of 0.1% is applied for the temperature range -80°C to 25°C followed by a 6% strain for the temperature rage 25°C to 80°C. An increased dynamic strain at higher temperatures is more reliable for the rolling resistance prediction.

### Examples

### Example 1: Confirmation of Olivine as a CO₂ absorber

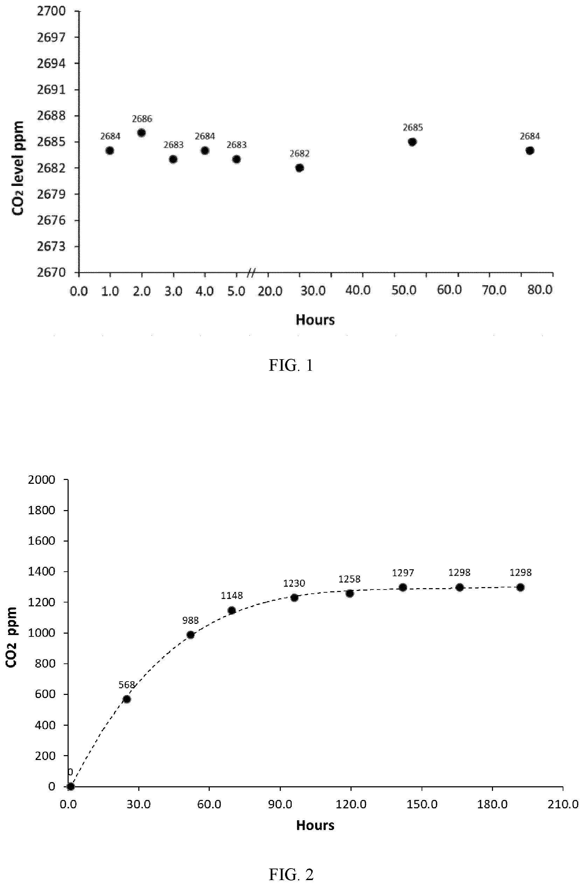

*Calibration method:* Three empty petri dishes were placed in a desiccator together with a CO₂ sensor and sealed off. A small amount of CO₂ was pumped into the desiccator until a sufficient amount of CO₂ was measured on the sensor. This measurement was then continuously taken. First, the measurements were taken every hour for 5 hours respectively, followed by once every 24 hours to check the stability and to ensure that CO₂ was not leaching out from the sealed environment of the desiccator. Figure 1 depicts the results of the calibration set up where it can be seen that the amount of CO₂ in the desiccator remains constant with very small deviations over a time period of 80 hours.

After calibrating the desiccator, 40g of olivine (GL 10, supplied by Werner Rumler Industriebedarf GmbH) was added to 3 petri dishes and wetted with water inside a desiccator to accelerate the reaction. The measurement was conducted over a time period of 8 days. The temperature of the desiccator was kept around 20°C in a controlled laboratory environment. Figure 2 depicts the results of the experiment where it can be seen that the reaction of CO₂ with olivine is a surface reaction. A total concentration of almost 1300ppm was absorbed on the surface over a period of 8 days, where the majority of absorption took place over the first 2 days.

The reaction of pure olivine with set CO₂ in a closed environment was confirmed by the above measurement.

### Example 2: Determination of the mechanical properties

The table 1 below shows the compositions of reference composition Ref1, and the compositions according to the present invention C1, C2, C3 and C4. Amounts for the components are given in phr. The difference between compositions C1, C2 and C3, C4 is the difference in the particle size of Olivine wherein C1, C2 have particle size of 1 to 180 µm and C3, C4 have particle size from 180 to 500 µm.

**Table 1: The compositions of reference composition Ref1, and the compositions according to the present invention C1, C2, C3 and C4**

| **Component:** | **Ref1** | **C1** | **C2** | **C3** | **C4** |
|---|---|---|---|---|---|
| | (phr) | (phr) | (phr) | (phr) | (phr) |
| SBR | 70 | 70 | 70 | 70 | 70 |
| BR | 30 | 30 | 30 | 30 | 30 |
| First filler | 80 | 80 | 80 | 80 | 80 |
| Coupling agent | 7.0 | 7.0 | 7.0 | 7.0 | 7.0 |
| Second filler | 5.0 | 5.0 | 5.0 | 5.0 | 5.0 |
| Olivine GL10 | . | 10 | 20 | . | . |
| Olivine GL55 | . | . | . | 10 | 20 |

The SBR rubber used was Solution Styrene Butadiene rubber Trinseo, Sprintan 4601 (21%styrene, 62%vinyl).

The BR rubber used was Butadiene rubber Trinseo Buna cis 132 (high cis, Ni-cat).

The first filler used was Silica (Solvay 1165MP)

The second filler used was carbon black N 339.

The coupling agent used was Silane (Evonik, Si69, TESPT)

Olivine GL10 was supplied by Werner Rumler Industriebedarf GmbH.

Olivine GL55 was supplied by Werner Rumler Industriebedarf GmbH.

**Table 2: Determination of the mechanical properties**

| **Test** | **Unit** | **Ref1** | **C1** | **C2** | **C3** | **C4** |
|---|---|---|---|---|---|---|
| Hardness | Shore A | 66.9 | 65.8 | 67.4 | 66.5 | 68.6 |
| Tensile Strength | MPa | 16.5 | 16.7 | 16.0 | 12.1 | 11.4 |
| Elongation at Break | % | 461 | 442 | 408 | 340 | 339 |
| Rebound @ 70°C | % | 50.7 | 52.6 | 52.6 | 53.2 | 51.3 |
| Rebound @ 23°C | % | 31.1 | 31.1 | 29.9 | 30.4 | 29.1 |
| Tan δ at 70°C | . | 0.20 | 0.19 | 0.20 | 0.19 | 0.21 |
| Tan δ at 0°C | . | 0.17 | 0.19 | 0.20 | 0.20 | 0.20 |

From compound properties in Table 3 it can be seen that the compositions C1 and C2 do not have an influence on the mechanical properties in the amount up to 20 phr. Addition of 10 phr olivine in composition C3 and more pronounced of 20 phr olivine in composition C4 deteriorates the mechanical properties in elongation at break. However, overall the tensile strength is not affected by olivine loading and particle size.

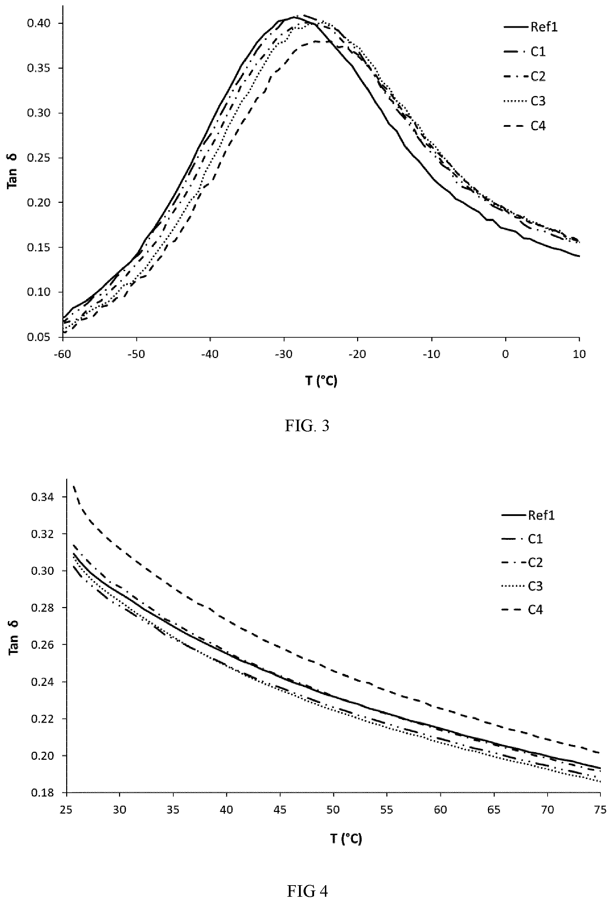

The addition of olivine to a composition resulted in a small Tg shift to higher temperatures and drop in tan δ max in the low temperature DMA (Figure 3). The effect becomes more pronounced with higher loading and higher particle size. However, all compounds containing olivine deliver similar tan δ value at 0°C, irrespective of the particle size and amount up to 20 phr. This indicated that in general, olivine is expected to have a positive effect on wet grip properties.

At higher temperatures in the DMA curve (Figure 4), it was noted that 10 phr addition of olivine will have a slightly lower tan δ at 70°C, indicating a positive effect on rolling resistance. The difference in particle size of the olivine does not seem to influence this parameter with a 10 phr loading.

It can be seen that the composition C1 and C2 have an improved wet grip and rolling resistance. Further, it can be seen that smaller particles showed improved effects.

### Example 3: Determination of the mechanical properties

The table 3 below shows the compositions of reference composition Ref2, and the compositions according to the present invention C5 and C6. Amounts for the components are given in phr. In this case, the reference and the composition according to the present invention used higher functionalized styrene butadiene rubbers.

**Table 3: The compositions of reference composition Ref₂ and the compositions according to the present invention C5 and C6.**

| **Component:** | **Ref2** | **C5** | **C6** |
|---|---|---|---|
| | (phr) | (phr) | (phr) |
| SBR | 70 | 70 | 70 |
| BR | 30 | 30 | 30 |
| First filler | 80 | 80 | 80 |
| Coupling agent | 7,0 | 7,0 | 7,0 |
| Second filler | 5,0 | 5,0 | 5,0 |
| Olivine GL10 | . | 10 | 20 |

The SBR rubber used was Solution Styrene Butadiene rubber Trinseo, Sprintan 4602 (21%styrene, 62%vinyl).

The BR rubber used was Butadiene rubber Trinseo Buna cis 132 (high cis, Ni-cat).

The first filler used was Silica (Solvay 1165MP)

The second filler used was carbon black N 339.

The coupling agent used was Silane (Evonik, Si69, TESPT)

Olivine GL10 was supplied by Werner Rumler Industriebedarf GmbH.

**Table 4: Determination of the mechanical properties**

| Test | Unit | Ref2 | C5 | C6 |
|---|---|---|---|---|
| Hardness | Shore A | 65.1 | 66.4 | 66.6 |
| Tensile Strength | MPa | 17.0 | 13.9 | 14.1 |
| Elongation at Break | % | 296 | 253 | 277 |
| Rebound @ 70°C | % | 64.3 | 62.6 | 62.3 |
| Rebound @ 23°C | % | 38.2 | 37.2 | 36.5 |
| Tan δ at 70°C | . | 0.11 | 0.12 | 0.12 |
| Tan δ at 0°C | . | 0.25 | 0.26 | 0.26 |

From compound properties in Table 4 it can be seen that the mechanical properties are not adversely affected by addition of olivine. Addition of 10 and 20 phr maintains the mechanical properties in elongation at break and tensile strength equally.

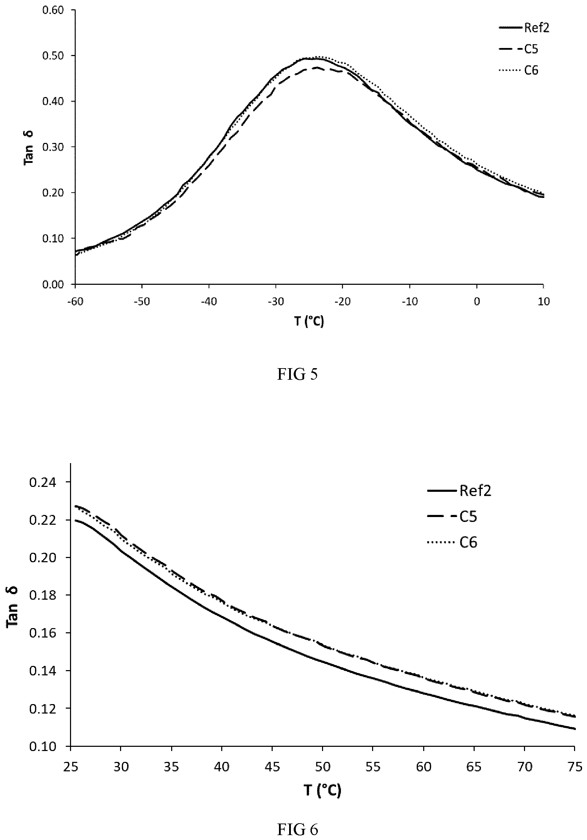

The addition of olivine in composition C5 indicated a minimal effect on Tg shift and height. Similarly tan δ values at 0°C for all compounds indicated a minimal effect on wet grip properties (Figure 5).

At higher temperatures in the DMA curve (Figure 6), no change to tan δ at 70°C was observed for 10 phr loaded compounds, indicating a no affect to rolling resistance. An increased addition of 10 phr of Olivine in composition C6 indicated a small deterioration in rolling resistance. This was also confirmed by a drop in rebound value at 70°C.

The addition of olivine to compositions C5 and C6 resulted in a composition having similar values for rolling resistance and mechanical properties as of the reference compound.

### Example 4: Determination of the mechanical properties

The table 5 below shows the compositions of reference composition Ref3, and the compositions according to the present invention C7 and C8. Amounts for the components are given in phr.

**Table 5: The compositions of reference composition Ref3, and the compositions according to the present invention C7 and C8**

| **Component:** | **Ref3** | **C7** | **C8** |
|---|---|---|---|
| | (phr) | (phr) | (phr) |
| SBR | 70 | 70 | 70 |
| BR | 30 | 30 | 30 |
| First filler | 80 | 60 | 40 |
| Coupling agent | 7,0 | 5.3 | 3.5 |
| Second filler | 5,0 | 5,0 | 5,0 |
| Olivine GL10 | . | 20 | 40 |

The SBR rubber used was Solution Styrene Butadiene rubber Trinseo, Sprintan 4601 (21%styrene, 62%vinyl).

The BR rubber used was Butadiene rubber Trinseo Buna cis 132 (high cis, Ni-cat).

The first filler used was Silica (Solvay 1165MP)

The second filler used was carbon black N 339.

The coupling agent used was Silane (Evonik, Si69, TESPT)

Olivine GL10 was supplied by Werner Rumler Industriebedarf GmbH.

**Table 6: Determination of the mechanical properties**

| Test | Unit | Ref3 | C7 | C8 |
|---|---|---|---|---|
| Hardness | Shore A | 67.0 | 57.2 | 49.9 |
| Tensile Strength | MPa | 15.9 | 14.6 | 11.6 |
| Elongation at Break | % | 409 | 415 | 431 |
| Rebound @ 70°C | % | 55.4 | 60.0 | 67.3 |
| Rebound @ 23°C | % | 36.0 | 41.0 | 49.1 |
| Tan δ at 70°C | . | 0.16 | 0.13 | 0.10 |
| Tan δ at 0°C | . | 0.26 | 0.20 | 0.20 |

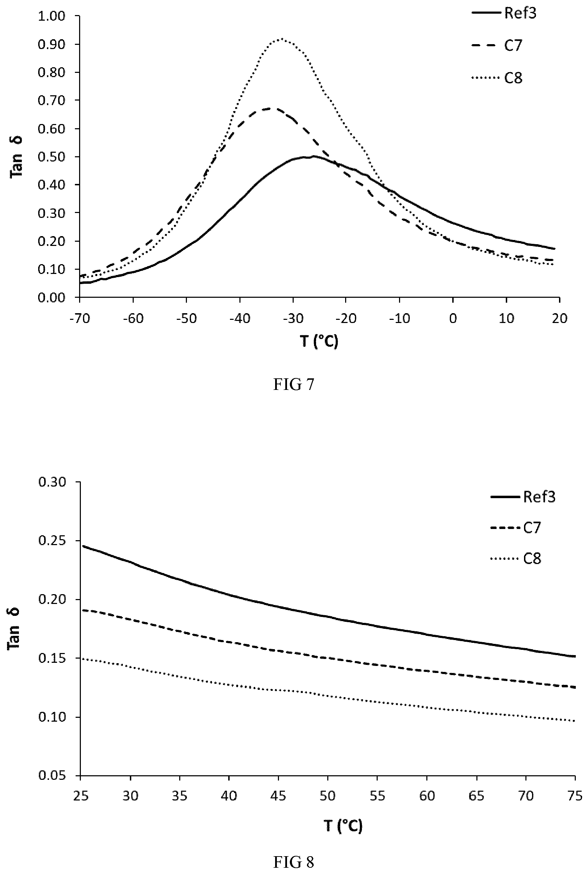

A significant drop in hardness and tensile properties in composition C8 indicated that olivine is not a reinforcing filler. This is also confirmed by the narrowing of the tan δ peak at lower temperatures as the olivine amount is increased and white filler is reduced (Figure 7). Additionally, a significant drop in hysteresis at higher temperatures was seen by increased amounts of olivine (Figure 8).

## Claims

1. A cross-linkable rubber composition, the cross-linkable rubber composition comprising:
at least one rubber,
at least one filler,
at least one olivine group mineral,
**characterized in that**
the filler is selected from silica, carbon black or a combination thereof, **in that** the olivine group mineral is present in an amount of ≥ 5 phr to ≤ 60 phr, and **in that** the ratio in parts by weight per 100 parts by weight of rubber (phr) of the olivine group mineral to the filler is in the range of 1:1 to 1:10.

2. The rubber composition according to claim 1, wherein the olivine group mineral is selected from the group of olivine, fosterite, fayalite, monticellite, or mixtures thereof

3. The rubber composition according to claim 1 or 2, wherein the olivine group mineral is or comprises olivine.

4. The rubber composition according to any of the preceding claims, wherein the filler is silica and the ratio in parts by weight per 100 parts by weight of rubber (phr) of the olivine group mineral to silica is in the range of 1:1 to 1:3.

5. The rubber composition according to claim 1, wherein the silica is present in an amount of ≥40 phr to ≤ 180 phr.

6. The rubber composition according to any one of the preceding claims, wherein the rubber is selected from natural rubber, isoprene rubber, butadiene rubber, styrene butadiene rubber, solution polymerized styrene butadiene rubber or combination thereof.

7. The rubber composition according to any of the preceding claims, wherein the olivine group mineral has a CO₂ absorption of up to 1300 ppm in 200 hrs.

8. A cross-linked rubber composition, **characterized in that** it is obtained by cross-linking a rubber composition according to one of claims 1 to 7.

9. The cross-linked rubber composition according to claim 8, wherein the composition has an elongation at break (measured by Tensile test according to ISO 37:2017) ranging from 253% to 442%.

10. The cross-linked rubber composition according to claim 8 or 9 with a rebound value at 70°C (as per ISO 4662:2017) ranging from ≥ 52% to ≤ 67%.

11. The cross-linked rubber composition according to claims 8 to 10 with a tan delta value at 70°C (as per DMA double shear 25°C to 80°C at 5% strain) ranging from ≥ 0.10 to ≤ 0.21.

12. A method of preparing a tyre, comprising the steps of:
- providing a tyre assembly comprising a cross-linkable rubber composition according to one of claims 1 to 7; and
- cross-linking at least the cross-linkable rubber composition according to one of claims 1 to 7 in the tyre assembly.

13. A tyre comprising a tread, **characterized in that** the tread comprises a cross-linked rubber composition according to one of claims 8 to 11.

## Patentansprüche

1. Vernetzbare Kautschukzusammensetzung, wobei die vernetzbare Kautschukzusammensetzung umfasst:
mindestens einen Kautschuk,
mindestens einen Füllstoff,
mindestens ein Mineral der Olivin-Gruppe,
**dadurch gekennzeichnet, dass**
der Füllstoff ausgewählt ist aus Kieselsäure, Ruß oder einer Kombination davon, dass das Mineral der Olivin-Gruppe in einer Menge von ≥5 phr bis ≤60 phr vorliegt, und dass das Verhältnis in Gewichtsteilen pro 100 Gewichtsteile Kautschuk (phr) des Minerals der Olivin-Gruppe zu dem Füllstoff im Bereich von 1:1 bis 1:10 liegt.

2. Kautschukzusammensetzung nach Anspruch 1, wobei das Mineral der Olivin-Gruppe aus der Gruppe Olivin, Fosterit, Fayalit, Monticellit oder Mischungen davon ausgewählt ist.

3. Kautschukzusammensetzung nach Anspruch 1 oder 2, wobei das Mineral der Olivin-Gruppe Olivin ist oder umfasst.

4. Kautschukzusammensetzung nach einem der vorhergehenden Ansprüche, wobei es sich bei dem Füllstoff um Kieselsäure handelt und das Verhältnis in Gewichtsteilen pro 100 Gewichtsteile Kautschuk (phr) des Minerals der Olivin-Gruppe zu Kieselsäure im Bereich von 1:1 bis 1:3 liegt.

5. Kautschukzusammensetzung nach Anspruch 1, wobei die Kieselsäure in einer Menge von ≥40 phr bis ≤ 180 phr vorliegt.

6. Kautschukzusammensetzung nach einem der vorhergehenden Ansprüche, wobei der Kautschuk aus Naturkautschuk, Isopren-Kautschuk, Butadien-Kautschuk, Styrol-Butadien-Kautschuk, lösungspolymerisiertem Styrol-Butadien-Kautschuk oder einer Kombination davon ausgewählt ist.

7. Kautschukzusammensetzung nach einem der vorhergehenden Ansprüche, wobei das Mineral der Olivin-Gruppe eine CO₂-Absorption von bis zu 1300 ppm in 200 h aufweist.

8. Vernetzte Kautschukzusammensetzung, **dadurch gekennzeichnet, dass** sie durch Vernetzen einer Kautschukzusammensetzung nach einem der Ansprüche 1 bis 7 erhalten wird.

9. Vernetzte Kautschukzusammensetzung nach Anspruch 8, wobei die Zusammensetzung eine Reißdehnung (gemessen durch Zugprüfung gemäß ISO 37:2017) im Bereich von 253 % bis 442 % aufweist.

10. Vernetzte Kautschukzusammensetzung nach Anspruch 8 oder 9 mit einem Rückprallwert bei 70 °C (gemäß ISO 4662:2017) im Bereich von ≥ 52 % bis ≤ 67 %.

11. Vernetzte Kautschukzusammensetzung nach den Ansprüchen 8 bis 10 mit einem tan-delta-Wert bei 70 °C (gemäß DMA-Doppelscherung 25 °C bis 80 °C bei 5 % Dehnung) im Bereich von ≥ 0,10 bis ≤ 0,21.

12. Verfahren zur Herstellung eines Reifens, das folgende Schritte umfasst:
- Bereitstellen einer Reifenanordnung, die eine vernetzbare Kautschukzusammensetzung nach einem der Ansprüche 1 bis 7 umfasst; und
- Vernetzen mindestens der vernetzbaren Kautschukzusammensetzung nach einem der Ansprüche 1 bis 7 in der Reifenanordnung.

13. Reifen mit einer Lauffläche, **dadurch gekennzeichnet, dass** die Lauffläche eine vernetzte Kautschukzusammensetzung nach einem der Ansprüche 8 bis 11 umfasst.

## Revendications

1. Composition de caoutchouc réticulable, la composition de caoutchouc réticulable comprenant :
au moins un caoutchouc,
au moins une charge,
au moins un minéral du groupe de l'olivine,
**caractérisé en ce que**
la charge est choisie parmi la silice, le noir de carbone ou une combinaison de ceux-ci, **en ce que** le minéral du groupe de l'olivine est présent en une quantité de ≥ 5 phr à ≤ 60 phr, et **en ce que** le rapport en parties en poids par 100 parties en poids de caoutchouc (phr) du minéral du groupe de l'olivine sur la charge est dans la plage de 1:1 à 1:10.

2. Composition de caoutchouc selon la revendication 1, dans laquelle le minéral du groupe de l'olivine est choisi dans le groupe constitué par l'olivine, la fostérite, la fayalite, la monticellite ou leurs mélanges.

3. Composition de caoutchouc selon la revendication 1 ou 2, dans laquelle le minéral du groupe de l'olivine est ou comprend de l'olivine.

4. Composition de caoutchouc selon l'une quelconque des revendications précédentes, dans laquelle la charge est la silice et le rapport en parties en poids par 100 parties en poids de caoutchouc (phr) du minéral du groupe de l'olivine sur la silice est dans la plage de 1:1 à 1:3.

5. Composition de caoutchouc selon la revendication 1, dans laquelle la silice est présente en une quantité de ≥ 40 phr à ≤ 180 phr.

6. Composition de caoutchouc selon l'une quelconque des revendications précédentes, dans laquelle le caoutchouc est choisi parmi le caoutchouc naturel, le caoutchouc d'isoprène, le caoutchouc de butadiène, le caoutchouc de styrène butadiène, le caoutchouc de styrène butadiène polymérisé en solution ou une combinaison de ceux-ci.

7. Composition de caoutchouc selon l'une quelconque des revendications précédentes, dans laquelle le minéral du groupe de l'olivine a une absorption de CO₂ allant jusqu'à 1300 ppm en 200 heures.

8. Composition de caoutchouc réticulée, **caractérisée en ce qu'**elle est obtenue par réticulation d'une composition de caoutchouc selon l'une des revendications 1 à 7.

9. Composition de caoutchouc réticulé selon la revendication 8, dans laquelle la composition a un allongement à la rupture (mesuré par essai de traction selon la norme ISO 37:2017) allant de 253 % à 442 %.

10. Composition de caoutchouc réticulé selon la revendication 8 ou 9, ayant une valeur de rebond à 70 °C (selon la norme ISO 4662:2017) dans la plage de ≥ 52 % à ≤ 67 %.

11. Composition de caoutchouc réticulé selon les revendications 8 à 10, ayant une valeur tan delta à 70 °C (selon un double cisaillement dans le DMA 25 °C à 80 °C à une déformation de 5 %) allant de ≥ 0,10 à ≤ 0,21.

12. Procédé de préparation d'un pneumatique, comprenant les étapes de :
- fourniture d'un ensemble pneumatique comprenant une composition de caoutchouc réticulable selon l'une des revendications 1 à 7 ; et
- réticulation d'au moins la composition de caoutchouc réticulable selon l'une des revendications 1 à 7 dans l'ensemble pneumatique.

13. Pneumatique comprenant une bande de roulement, **caractérisé en ce que** la bande de roulement comprend une composition de caoutchouc réticulé selon l'une des revendications 8 à 11.
